# EUROPEAN PATENT APPLICATION

(11) **EP 4 640 494 A1**
(43) Date of publication of application: **29.10.2025**
(21) Application number: 25167306.7
(22) Date of filing: 31.03.2025
(51) Int. Cl.: B60R 19/04

(54) **VEHICLE FRONT STRUCTURE**

(30) Priority: 24.04.2024 JP 2024070768
(71) Applicant: TOYOTA JIDOSHA KABUSHIKI KAISHA, Toyota-shi, Aichi-ken, 471-8571 (JP)
(72) Inventor: NIWATA, Shuhei, TOYOTA-SHI, AICHI-KEN, 471-8571 (JP)
(74) Representative: Cabinet Beau de Loménie

(57) **Abstract**

A vehicle front structure (10) includes: a framework part (16); a crash box (70); a bumper reinforcement (80); a protruding part (82; 100; 200; 300) that protrudes from an end portion of the bumper reinforcement (80) toward a vehicle rear side. An end portion of the protruding part (82; 100; 200; 300) includes a first inclined portion (82E; 100A; 200E; 300D). The end portion of the bumper reinforcement (80) extends along the vehicle width direction so as to project toward the outer side in the vehicle width direction beyond an end portion of the crash box (70). As seen in a plan view, the first inclined portion (82E; 100A; 200E; 300D) slopes outward from an inner side of the end portion of the protruding part (82; 100; 200; 300) in the vehicle width direction toward the vehicle rear side.

## Description

### 1. Field of the Invention

The present invention relates to a vehicle front structure.

### 2. Description of Related Art

Japanese Unexamined Patent Application Publication No. 2016-078492 (JP 2016-078492 A) discloses a vehicle front structure in which extension parts are provided at portions on outer sides in a vehicle width direction of a bumper reinforcement. In this vehicle front structure, in the event of a so-called small-overlap collision, a load input into the portion on the outer side in the vehicle width direction of the bumper reinforcement is transmitted to a front side member through the extension part. Meanwhile, a rear projection part provided on the extension part hits a side surface of a crash box (fragile part) provided on a front side of the front side member. The crash box is configured to consequently undergo bending deformation toward an inner side in the vehicle width direction at a middle portion thereof in an extension direction and thereby absorb the collision load.

### SUMMARY OF THE INVENTION

As a measure in the event of a small-overlap collision, a method is known in which a collision load input from a barrier is transmitted to a rigid region of a vehicle and a lateral force toward an opposite-collision side (the inner side in the vehicle width direction) is generated in this rigid region to thereby dodge around the barrier. In this case, it is conceivable to use a crash box as a reaction force surface for generating a lateral force toward the opposite-collision side. In the vehicle front structure described in JP 2016-078492 A, however, as the crash box undergoes bending deformation under a collision load input from a barrier, this crash box cannot be used as the reaction force surface.

With this fact taken into account, the present invention aims to obtain a vehicle front structure that can reduce damage to a crash box in the event of a small-overlap collision such that the crash box can be used as a reaction force surface for generating a lateral force toward the opposite-collision side.

A vehicle front structure according to a first aspect includes: a framework part that is disposed at a front part of a vehicle, on an outer side of the vehicle in a vehicle width direction, and that extends along a vehicle front-rear direction; a crash box that is extended from an end portion of the framework part toward a vehicle front side, the end portion of the framework part being an end portion on the vehicle front side of the framework part; a bumper reinforcement that is connected to the vehicle front side of the crash box; a protruding part that protrudes from an end portion of the bumper reinforcement toward a vehicle rear side. The end portion of the bumper reinforcement is an end portion on the outer side in the vehicle width direction of the bumper reinforcement. An end portion of the protruding part includes a first inclined portion. The end portion of the protruding part is an end portion on the vehicle rear side of the protruding part. The end portion of the bumper reinforcement extends along the vehicle width direction so as to project toward the outer side in the vehicle width direction beyond an end portion of the crash box, the end portion of the crash box being an end portion on the outer side in the vehicle width direction of the crash box. As seen in a plan view, the first inclined portion slopes outward from an inner side of the end portion of the protruding part in the vehicle width direction toward the vehicle rear side.

The vehicle front structure according to the first aspect includes the crash box that is extended from an end portion of the framework part toward a vehicle front side, the end portion of the framework part being an end portion on the vehicle front side of the framework part, and the bumper reinforcement extending in the vehicle width direction is connected to the crash box. At the end portion on the outer side in the vehicle width direction of the bumper reinforcement, the protruding part protruding toward the vehicle rear side is provided.

According to this configuration, in the event of a small-overlap collision, a collision load input from a barrier is borne by the bumper reinforcement, and the collision load that is further input causes the end portion on the outer side in the vehicle width direction of the bumper reinforcement to undergo bending deformation, so that the collision load is transmitted through the protruding part to the crash box.

Here, the protruding part has the first inclined portion that slopes outward from an inner side of the end portion of the protruding part in the vehicle width direction toward the vehicle rear side as seen in a plan view. Therefore, when the bumper reinforcement undergoes bending deformation, the first inclined portion of the protruding part hits the side surface on the outer side in the vehicle width direction of the crash box. That is, the collision load transmitted from the bumper reinforcement is input through the first inclined portion. In this state, the first inclined portion is disposed so as to extend along the extension direction of the crash box and face the side surface on the outer side in the vehicle width direction of the crash box. Thus, an input of a local load into the crash box is inhibited and damage to the crash box can be reduced. As a result, the collision load can be transmitted from the crash box to the framework part, and the crash box can be used as a reaction force surface for generating a lateral force toward an opposite-collision side.

In a vehicle front structure according to a second aspect, in the configuration described in the first aspect, the first inclined portion may have a flat surface.

In the vehicle front structure according to the second aspect, the first inclined portion has a flat surface and therefore comes into plane contact with the side surface of the crash box. Thus, the area of contact between the first inclined portion and the crash box increases and damage to the crash box can be effectively reduced.

In a vehicle front structure according to a third aspect, in the configuration described in the first aspect or the second aspect, a load bearing part may be provided rearward of the crash box in the vehicle front-rear direction, and at least a part of the load bearing part may be disposed in the vehicle rear side relative to the protruding part, and at least a part of the load bearing part may extend outward in the vehicle width direction from a side surface of the crash box , the side surface being a surface on the outer side of the crash box in the vehicle width direction.

The vehicle front structure according to the third aspect includes the load bearing part that is provided rearward of the crash box in the vehicle front-rear direction. At least a part of the load bearing part extends from the side surface on the outer side in the vehicle width direction of the crash box toward the outer side in the vehicle width direction at a position on the vehicle rear side relative to the protruding part. Thus, when the bumper reinforcement undergoes bending deformation and the end portion on the vehicle rear side of the protruding part hits the load bearing part, the protruding part is guided by the load bearing part so as to move toward the inner side in the vehicle width direction such that the first inclined portion can hit the side surface of the crash box. In the event of a small-overlap collision, therefore, stable load transmission is possible even when the protruding part comes into contact with the load bearing part before the crash box due to variation in the amount of overlap between the vehicle and the barrier.

In a vehicle front structure according to a fourth aspect, in the configuration described in any one of the first aspect to the third aspect, the protruding part may have a second inclined portion, and the second inclined portion may be connected to a rear end of the first inclined portion in the vehicle front-rear direction, and the second inclined portion may slope outward in the vehicle width direction toward the vehicle front side.

In the vehicle front structure according to the fourth aspect, the protruding part has the second inclined portion that is connected to the rear end of the first inclined portion in the vehicle front-rear direction and slopes outward in the vehicle width direction toward the vehicle front side. Thus, when the bumper reinforcement undergoes bending deformation, the first inclined portion of the protruding part hits the side surface on the outer side in the vehicle width direction of the crash box while the second inclined portion hits the load bearing part. As a result, the area of contact between the protruding part and the load bearing part increases, which allows stable load transmission through the load bearing part.

In a vehicle front structure according to a fifth aspect, in the configuration described in the third aspect, the load bearing part may be integrally provided in the framework part.

In the vehicle front structure according to the fifth aspect, the load bearing part is integrally formed in the framework part. This can improve the efficiency of transmission of a collision load from the load bearing part to the framework part.

In a vehicle front structure according to a sixth aspect, in the configuration described in the third aspect, the load bearing part and the framework part may each have an open cross-section that is open toward the outer side in the vehicle width direction.

In the vehicle front structure according to the sixth aspect, the load bearing part and the framework part have an open cross-section that is open toward the outer side in the vehicle width direction. Thus, the load bearing part and the framework part can be molded by a die with the open direction of the cross-section as a die removal direction. This facilitates the manufacturing of the load bearing part and the framework part and reduces the production cost.

In a vehicle front structure according to a seventh aspect, in the configuration described in the third aspect, the load bearing part may include: a first wall portion that is disposed on the vehicle rear side of the crash box and extends in the vehicle width direction; a second wall portion that is connected on the outer side in the vehicle width direction of the first wall portion and extends toward the vehicle front side; and a third wall portion that is connected on the vehicle front side of the second wall portion and extends from the side surface on the outer side in the vehicle width direction of the crash box toward the outer side in the vehicle width direction.

In the vehicle front structure according to the seventh aspect, when the bumper reinforcement undergoes bending deformation, a load input from the protruding part into the third wall portion is transmitted through the second wall portion to the first wall portion. Thus, since the second wall portion extending in the vehicle front-rear direction is disposed between the third wall portion and the first wall portion, an input of a distributed load toward the vehicle rear side of the framework part can be stabilized and the efficiency of transmission of the collision load can be improved.

In a vehicle front structure according to an eighth aspect, in the configuration described in the seventh aspect, the load bearing part may include a reinforcing rib that links the second wall portion and the third wall portion to each other.

In the vehicle front structure according to the eighth aspect, the load bearing part has the reinforcing rib that links the second wall portion and the third wall portion to each other. Thus, the strength of the third wall portion that receives an input of a collision load through the protruding part increases, and the efficiency of transmission of the collision load can be improved.

In a vehicle front structure according to a ninth aspect, in the configuration described in the seventh aspect or the eighth aspect, the load bearing part may include a mount part for a suspension member that is provided forward of the first wall portion and rearward of the third wall portion in the vehicle front-rear direction.

In the vehicle front structure according to the ninth aspect, the load bearing part includes the mount part for the suspension member that is provided forward of the first wall portion and rearward of the third wall portion in the vehicle front-rear direction. Thus, when the bumper reinforcement undergoes bending deformation, part of a collision load input from the protruding part into the third wall portion is transmitted to the mount part in the process of being transmitted from the third wall portion to the first wall portion. Then, this part of the collision load is transmitted through the mount part to the suspension member. Thus, a collision load in the event of a small-overlap collision can be quickly transmitted to the suspension member, so that a lateral force toward the opposite-collision side can be quickly generated.

In a vehicle front structure according to a tenth aspect, in the configuration described in any one of the seventh aspect to the ninth aspect, the load bearing part may have a fourth wall portion that is connected on the inner side in the vehicle width direction of the first wall portion and extends toward the vehicle front side.

In the vehicle front structure according to the tenth aspect, the load bearing part includes the fourth wall portion that is connected on the inner side in the vehicle width direction of the first wall portion and extends toward the vehicle front side. Therefore, the fourth wall portion is disposed on the inner side in the vehicle width direction of the crash box. Thus, the crash box is inhibited by the fourth wall portion from moving toward the inner side in the vehicle width direction under a collision load input from the outer side in the vehicle width direction through the protruding part, which can stabilize the transmission path of the collision load. Further, a reaction force obtained from the crash box increases owing to the fourth wall portion, so that the efficiency of transmission of the collision load to the framework part can be improved.

As has been described above, the vehicle front structure according to the present invention can reduce damage to the crash box in the event of a small-overlap collision such that the crash box can be used as a reaction force surface for generating a lateral force toward the opposite-collision side.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a view, as seen from an obliquely left front side, of a vehicle to which a vehicle front structure according to an embodiment is applied, and is a perspective view schematically showing one example of main parts of a vehicle front part;
FIG. 2 is a view, as seen from an upper side, of the vehicle to which the vehicle front structure according to the embodiment is applied, and is a plan view schematically showing one example of the main parts of the vehicle front part;
FIG. 3 is a side view, as seen from a left side, of a front part of the vehicle to which the vehicle front structure according to the embodiment is applied;
FIG. 4 is an enlarged plan view, as seen from the upper side, of a load bearing part and a crash box connected to the load bearing part according to the embodiment;
FIG. 5 is an enlarged perspective view of a protruding part according to the embodiment as seen from an obliquely right rear side;
FIG. 6A is plan views of the vehicle front part schematically showing a form of a collision in a case where an amount of overlap with a barrier is large in a small-overlap collision, showing a state immediately after the collision;
FIG. 6B is plan views of the vehicle front part schematically showing a form of a collision in a case where an amount of overlap with a barrier is large in a small-overlap collision, showing a state where the position of the barrier has moved toward a vehicle rear side after the collision;
FIG. 7A is plan views of the vehicle front part schematically showing a form of a collision in a case where the amount of overlap with a barrier is small in a small-overlap collision, showing a state immediately after the collision;
FIG. 7B is plan views of the vehicle front part schematically showing a form of a collision in a case where the amount of overlap with a barrier is small in a small-overlap collision, showing a state where the position of the barrier has moved toward the vehicle rear side after the collision;
FIG. 8 is an enlarged plan view showing a first modified example of the protruding part according to the embodiment and corresponds to FIG. 4;
FIG. 9 is an enlarged perspective view showing a second modified example of the protruding part according to the embodiment and corresponds to FIG. 5; and
FIG. 10 is an enlarged perspective view showing a third modified example of the protruding part according to the embodiment and corresponds to FIG. 5.

### DETAILED DESCRIPTION OF EMBODIMENTS

A vehicle front structure according to an embodiment will be described below using the drawings. An arrow FR shown as necessary in the drawings indicates a front side in a vehicle front-rear direction, and an arrow UP indicates an upper side in a vehicle-height direction. An arrow LH indicates a left side in a vehicle width direction, and in this embodiment indicates an outer side in the vehicle width direction. Hereinafter, when description is given using simple directions of front and rear, up and down, and left and right, unless otherwise noted, these directions indicate front and rear in the vehicle front-rear direction, up and down in the vehicle-height direction, and left and right in a vehicle left-right direction (vehicle width direction).

Unless otherwise noted in this Description, the number of each element is not limited to one and a plurality of elements may be present. In the drawings, substantially the same elements are denoted by the same reference sign and repeated description in this Description will be omitted.

### General Configuration of Vehicle Front Part

First, a vehicle 12 to which a vehicle front structure 10 according to the embodiment is applied will be described. For example, the vehicle 12 has a power unit including a motor, an engine, etc. as a driving source and travels on motive power generated by the power unit. The driving source of the vehicle 12 is not particularly limited. For example, the vehicle 12 may be an internal combustion engine vehicle (a vehicle having only an internal combustion engine as a driving source), or may be a hybrid electric vehicle (HEV). Or the vehicle 12 may be a plug-in hybrid electric vehicle (PHEV), or may be a battery electric vehicle (BEV) or a fuel cell electric vehicle (FCEV).

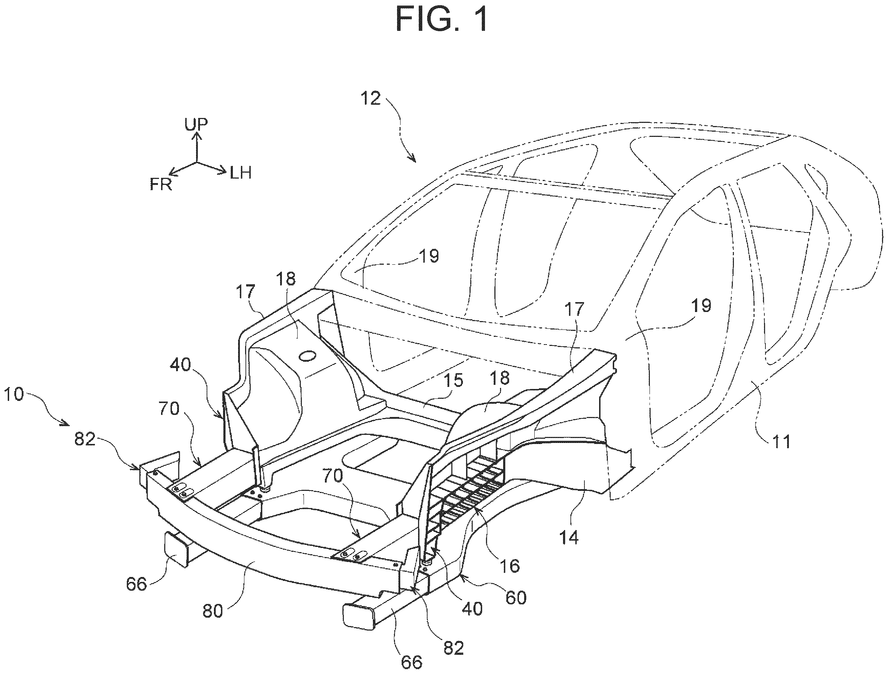

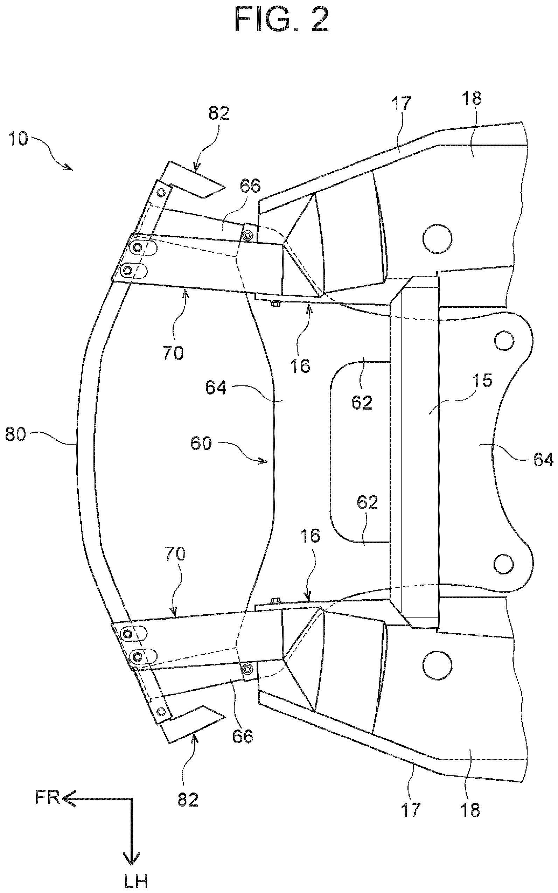

FIG. 1 is a perspective view of the vehicle 12 as seen from an obliquely left front side, and FIG. 2 is a plan view of the vehicle 12 as seen from the upper side. In FIG. 1 and FIG. 2, main parts of a framework in a front part of the vehicle 12 are schematically shown. As shown in these drawings, at the front part of the vehicle 12, front side members 16, a suspension member 60, crash boxes 70, a bumper reinforcement 80, etc. are provided as framework parts.

The front side members 16 are disposed at the vehicle front part, on the left and right sides that are the outer sides in the vehicle width direction, and each extend along the vehicle front-rear direction. The power unit (not shown) is installed between the left and right front side members 16. This power unit is supported from the lower side by the suspension member 60. The suspension member 60 is installed on the vehicle lower side of the left and right front side members 16. At front end portions and rear end portions of the suspension member 60, both ends in the vehicle width direction are mounted on the left and right front side members 16 from the lower side.

On the front side of the left and right front side members 16, the crash boxes 70 that can absorb impact energy are respectively extended along the vehicle front-rear direction. At front ends of the left and right crash boxes 70, the bumper reinforcement 80 that is a framework part of a front bumper is extended along the vehicle width direction.

While the front side members 16 and the crash boxes 70 are being described as separate parts here, a configuration in which these parts are integrated may be adopted.

On the other hand, on the rear side of the left and right front side members 16, wheel houses 14 in which wheels (not shown) are disposed are respectively provided, and the right wheel house 14 and the left wheel house 14 are linked to each other by a cross member 15.

Further, on the outer side in the vehicle width direction and the upper side in the vehicle-height direction of each front side member 16, an apron upper member 17 is disposed. The apron upper member 17 is a framework part that constitutes a framework on an upper lateral side at the front part of the vehicle 12. The apron upper member 17 extends in the vehicle front-rear direction along the front side member 16, and a rear end portion of the apron upper member 17 is coupled to a front pillar 19. In the apron upper member 17, a suspension tower 18 is integrally formed. On the rear side in the vehicle front-rear direction of each wheel house 14, a rocker 11 is provided that is extended along the vehicle front-rear direction and constitutes a framework at a side part of a vehicle body.

In this embodiment, the left and right front side members 16, the left and right wheel houses 14, the cross member 15, the apron upper members 17, and the suspension towers 18 are integrally molded by casting using an aluminum alloy, a magnesium alloy, etc. as a material.

Thus, each member of the front side members 16, the left and right wheel houses 14, the cross member 15, the apron upper members 17, and the suspension towers 18 has an open cross-section that is open in a die removal direction during casting. In this embodiment, one side and the other side in the vehicle width direction can be the die removal direction. Accordingly, the cross-section of each member is an open cross-section that is open at least toward one side in the vehicle width direction.

All or some of the front side members 16, the left and right wheel houses 14, the cross member 15, the apron upper members 17, and the suspension towers 18 may be formed as separate parts.

In the following, the configuration of each of the front side members 16, the suspension member 60, the crash boxes 70, and the bumper reinforcement 80 that are main parts of the present invention will be described in detail.

### Front Side Member

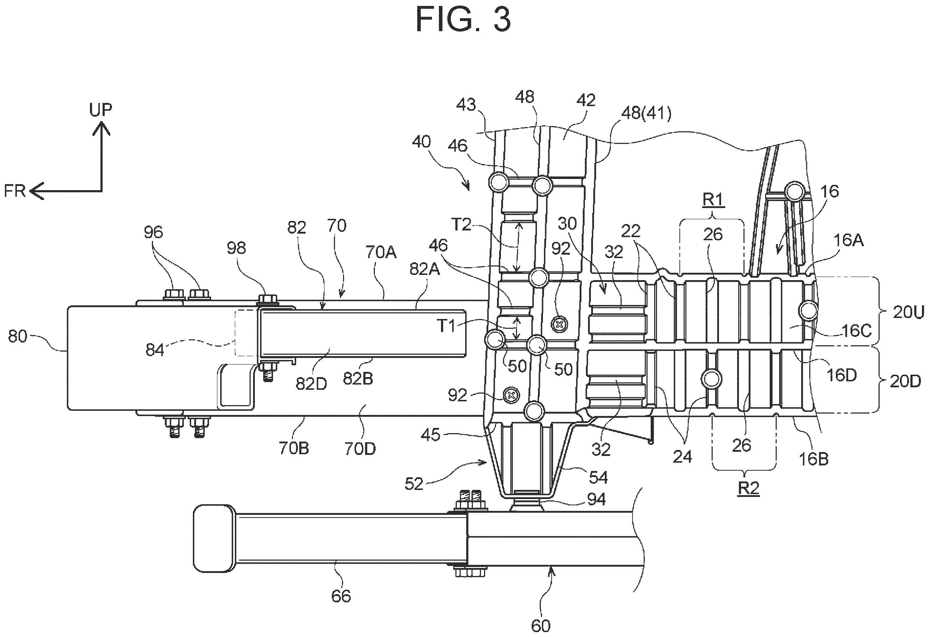

FIG. 3 is a side view of the front part of the vehicle 12 as seen from the left side. The front side member 16 is extended along the vehicle front-rear direction as described above. The front side member 16 includes an upper wall portion 16A, a lower wall portion 16B, an inner wall portion 16C, and a division wall portion 16D, and has a substantially E-shaped open-cross-section that is open toward the outer side in the vehicle width direction. The upper wall portion 16A constitutes an upper wall of the front side member 16. The lower wall portion 16B constitutes a lower wall of the front side member 16. The inner wall portion 16C constitutes an inner wall that links an end portion on the inner side in the vehicle width direction of the upper wall portion 16A and an end portion on the inner side in the vehicle width direction of the lower wall portion 16B to each other. The division wall portion 16D is erected from a middle portion in the vehicle-height direction of the inner wall portion 16C toward the outer side in the vehicle width direction and divides an internal space of the front side member 16 into two upper and lower segments. Hereinafter, in the front side member 16, a configuration on the upper side including the division wall portion 16D will be referred to as an upper-tier segment 20U and a configuration on the lower side including the division wall portion 16D will be referred to as a lower-tier segment 20D.

Cross-sections of the upper-tier segment 20U and the lower-tier segment 20D of the front side member 16 as cut along the vehicle width direction are substantially U-shaped cross-sections that are open toward the outer side in the vehicle width direction. An internal space of the upper-tier segment 20U is divided into a plurality of room portions R1 by a plurality of ribs 22 that is provided along the vehicle front-rear direction. In each rib 22, a substantially U-shaped notch (reference sign omitted) that is open toward the outer side in the vehicle width direction is formed. As with the upper-tier segment 20U, an internal space of the lower-tier segment 20D is divided into a plurality of room portions R2 by a plurality of ribs 24 that is provided along the vehicle front-rear direction. In each rib 24, a substantially U-shaped notch (reference sign omitted) that is open toward the outer side in the vehicle width direction is formed.

Here, the arrangement positions of the ribs 22 in the upper-tier segment 20U and the ribs 24 in the lower-tier segment 20D of the front side member 16 are offset along the extension direction of the front side member 16 (vehicle front-rear direction), and the ribs 22 and the ribs 24 are offset by, for example, a 1/2 wavelength.

In each of the room portions R1, R2 of the upper-tier segment 20U and the lower-tier segment 20D, a bead 26 extending in a direction intersecting the extension direction is formed between the ribs 22, 24 that are disposed one in front of the other. In this embodiment, the bead 26 is provided to serve as a starting point of deformation when the front side member 16 is axially compressed by an input of a collision load in the vehicle front-rear direction. Therefore, each bead 26 extends in a direction orthogonal to the extension direction of the front side member 16 (load input direction). The bead 26 is, for example, a recessed groove. The front side member 16 is fragile at areas where the beads 26 are formed, with the plate thickness smaller than at the other areas and the rigidity lower than at the other areas.

As one example, the bead 26 provided in each room portion R1 of the upper-tier segment 20U extends continuously to the upper wall portion 16A and the inner wall portion 16C of the front side member 16. The position of the bead 26 provided in each room portion R1 of the upper-tier segment 20U coincides with the position of the rib 24 of the lower-tier segment 20D along the vehicle front-rear direction. On the other hand, the bead 26 provided in each room portion R2 of the lower-tier segment 20D extends continuously to the lower wall portion 16B and the inner wall portion 16C of the front side member 16. The position of the bead 26 provided in each room portion R2 of the lower-tier segment 20D coincides with the position of the rib 22 of the upper-tier segment 20U in the vehicle front-rear direction.

At an end portion on the vehicle front side of the front side member 16, a high-rigidity portion 30 is formed of which the rigidity against a collision load input along the vehicle front-rear direction is enhanced compared with the other areas of the front side member 16. At the high-rigidity portion 30, the positions of the rib 22 of the upper-tier segment 20U and the rib 24 of the lower-tier segment 20D of the front side member 16 coincide with each other along the extension direction of the front side member 16 (vehicle front-rear direction). In the upper-tier segment 20U and the lower-tier segment 20D, reinforcing ribs 32 that are coupled to middle portions in the vehicle-height direction of the respective ribs 22, 24 are formed. The reinforcing ribs 32 extend along the vehicle front-rear direction from the respective ribs 22, 24 toward the vehicle front side, and are coupled to a first wall portion 41 of a load bearing part 40 to be described later.

By the above-described configuration, the front side member 16 constitutes an impact absorbing part that absorbs a collision load input along the vehicle front-rear direction in the event of a full-overlap collision or an offset collision of the vehicle 12. That is, when a collision load along the vehicle front-rear direction is input into the front end portion of the front side member 16, the collision load is quickly transmitted through the reinforcing ribs 32 of the high-rigidity portion 30 to the ribs 22, 24 that are disposed in a frontmost row in the upper-tier segment 20U and the lower-tier segment 20D. Thereafter, in the upper-tier segment 20U and the lower-tier segment 20D, the pluralities of room portions R1, R2 that are arrayed in a row break in turn from the vehicle front side, whereby a breaking load is generated. In this process, the collision load is absorbed.

Since the arrangement positions of the ribs 22 in the upper-tier segment 20U and the ribs 24 in the lower-tier segment 20D of the front side member 16 are offset along the extension direction of the front side member 16 (vehicle front-rear direction), in the process of a collision, breaking of the room portion R1 of the upper-tier segment 20U and breaking of the room portion R2 of the lower-tier segment 20D are alternately performed. Thus, timings when a breaking load is generated in the upper-tier segment 20U and the lower-tier segment 20D can be offset, as well as the number of times that the collision load is absorbed through generation of a breaking load can be increased. As a result, a load difference between breaking loads that are generated with a time lag can be reduced.

Moreover, the beads 26 provided in the room portions R1, R2 of the upper-tier segment 20U and the lower-tier segment 20D serve as starting points of deformation when a collision load is input. Thus, the room portions R1, R2 can be deformed with the beads 26 as starting points, which can stabilize the breaking mode.

### Load Bearing Part

As shown in FIG. 3, on the front side of the front side member 16, the load bearing part 40 is provided. In this embodiment, the front side member 16 and the load bearing part 40 are integrally molded by casting, and the load bearing part 40 constitutes a part of an end portion on the vehicle front side of the front side member 16. Thus, as with the front side member 16, a cross-section of the load bearing part 40 as cut along the vehicle-height direction is an open cross-section that is open toward the outer side in the vehicle width direction. It is not essential to integrally form the front side member 16 and the load bearing part 40, and a configuration in which these parts are separate parts may be adopted.

The load bearing part 40 has a configuration including the first wall portion 41, a second wall portion 42, a third wall portion 43, a fourth wall portion 44, and a fifth wall portion 45. The first wall portion 41 extends in the vehicle width direction, with a plate thickness direction oriented in the vehicle front-rear direction, and has principal surfaces facing the vehicle front-rear direction. On the principal surface constituting a rear surface of the first wall portion 41, end portions on the vehicle front side of the upper wall portion 16A, the lower wall portion 16B, the inner wall portion 16C, and the division wall portion 16D of the front side member 16 are connected. On the principal surface constituting the rear surface of the first wall portion 41, the reinforcing ribs 32 extending from the high-rigidity portion 30 of the front side member 16 are coupled. On the other hand, on the principal surface constituting a front surface of the first wall portion 41, a portion on the vehicle rear side of the crash box 70, to be described later, is connected.

The second wall portion 42 is connected on the outer side in the vehicle width direction of the first wall portion 41, and extends from a portion on the outer side in the vehicle width direction of the first wall portion 41 toward the vehicle front side. The second wall portion 42 extends in the vehicle front-rear direction, with a plate thickness direction oriented in the vehicle width direction, and has principal surfaces facing the vehicle width direction. The principal surface on the inner side in the vehicle width direction is disposed so as to face a side surface on the outer side in the vehicle width direction (outer wall portion 70D) of the crash box 70. The second wall portion 42 is joined to the outer wall portion 70D of the crash box 70 through a fastening member 92. The fastening member 92 is, for example, a weld nut that is welded to an inner surface of the second wall portion 42 and a bolt that penetrates the second wall portion 42 and the outer wall portion 70D of the crash box 70 and engages with the weld nut.

The third wall portion 43 is connected on the vehicle front side of the second wall portion 42 and extends from a portion on the vehicle front side of the second wall portion 42 toward the outer side in the vehicle width direction. That is, the third wall portion 43 extends from the side surface on the outer side in the vehicle width direction (outer wall portion 70D) of the crash box 70 toward the outer side in the vehicle width direction. The third wall portion 43 extends in the vehicle width direction, with a plate thickness direction oriented in the vehicle front-rear direction, and has principal surfaces facing the vehicle front-rear direction. The principal surface on the vehicle front side is disposed so as to face an end portion on the outer side in the vehicle width direction of the bumper reinforcement 80 to be described later.

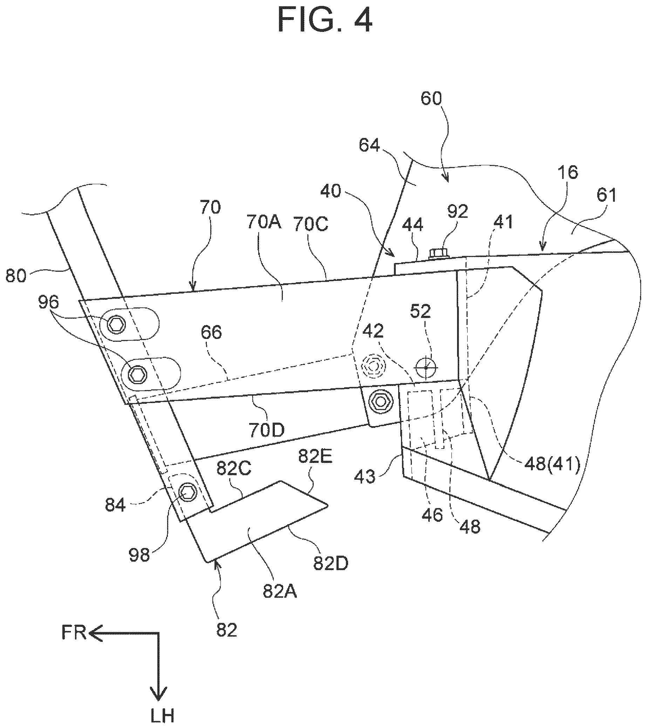

The fourth wall portion 44 is connected on the inner side in the vehicle width direction of the first wall portion 41 and extends from a portion on the inner side in the vehicle width direction of the first wall portion 41 toward the vehicle front side. In other words, the fourth wall portion 44 is connected on the inner side of the first wall portion 41 and extends from an inner side portion of the first wall portion 41, the inner side being a side in the vehicle width direction of the first wall portion 41. The fourth wall portion 44 extends in the vehicle front-rear direction, with a plate thickness direction oriented in the vehicle width direction, and has principal surfaces facing the vehicle width direction. The principal surface on the outer side in the vehicle width direction is disposed so as to face a side surface on the inner side in the vehicle width direction (inner wall portion 70C) of the crash box 70. As with the second wall portion 42, the fourth wall portion 44 is joined to the inner wall portion 70C of the crash box 70 through a fastening member 92 (see FIG. 4).

By the second wall portion 42 and the fourth wall portion 44, the crash box 70 is connected to the end portion on the vehicle front side of the front side member 16. By being joined to the second wall portion 42 and the fourth wall portion 44, a portion on the vehicle rear side of the crash box 70 is enhanced in the rigidity against a collision load input in the vehicle width direction. The load bearing part 40 and the crash box 70 may be joined together by welding.

Here, in the load bearing part 40, reinforcing ribs 46 are provided that inhibit bending deformation of the third wall portion 43 when a collision load that is input along the vehicle front-rear direction is input. The reinforcing ribs 46 are erected from the principal surface on the outer side in the vehicle width direction of the second wall portion 42, and link the second wall portion 42 and the third wall portion 43 to each other. In this embodiment, a plurality of reinforcing ribs 46 is provided along the vehicle-height direction.

As shown in FIG. 3, the plurality of reinforcing ribs 46 include reinforcing ribs 46 that are formed along the upper wall portion 16A, the lower wall portion 16B, and the division wall portion 16D of the front side member 16 as seen from a lateral side. These reinforcing ribs 46 are formed along a collision load input direction that is the vehicle front-rear direction along with the upper wall portion 16A, the lower wall portion 16B, and the division wall portion 16D of the front side member 16. Thus, of a collision load input into the third wall portion 43, a distributed load that has been distributed toward the vehicle rear side is quickly transmitted through the reinforcing ribs 46 to the upper wall portion 16A, the lower wall portion 16B, and the division wall portion 16D of the front side member 16.

The plurality of reinforcing ribs 46 includes at least one reinforcing rib 46 that is disposed at a level overlapping the bumper reinforcement 80 and a protruding part 82, to be described later, in the vehicle front-rear direction, and in this embodiment, two reinforcing ribs 46 are disposed at levels overlapping the bumper reinforcement 80 and the protruding part 82 in the vehicle front-rear direction. An interval T1 between these two reinforcing ribs 46 is set to be smaller than an interval T2 between the reinforcing ribs 46 that are adjacent to each other in a region that does not overlap the bumper reinforcement 80 and the protruding part 82 in the vehicle front-rear direction. Thus, the arrangement of the two reinforcing ribs 46 is an effective arrangement from the viewpoint of enhancing the rigidity of the third wall portion 43 against a collision load input from the bumper reinforcement 80 and the protruding part 82.

The load bearing part 40 has vertical ribs 48 that intersect with the plurality of reinforcing ribs 46. The vertical ribs 48 are erected from the principal surface on the outer side in the vehicle width direction of the second wall portion 42 and extend in the vehicle-height direction. The vertical ribs 48 are respectively formed at an end portion on the vehicle rear side of the second wall portion 42 and at a middle portion in the vehicle front-rear direction of the second wall portion 42. The vertical rib 48 provided at the end portion on the vehicle rear side of the second wall portion 42 is integrally formed in an end portion on the outer side in the vehicle width direction of the first wall portion 41 of the load bearing part 40.

A plurality of columnar ejector pin seats 50 is erected from the principal surface on the outer side in the vehicle width direction of the second wall portion 42. The ejector pin seats 50 hit ejector pins that are provided on a fixed die side of the die when forming the load bearing part 40 by casting. That is, in a state where the die is opened during casting, the ejector pins on the fixed die side hit the ejector pin seats 50 and press the load bearing part 40 to release it from the die. The ejector pin seats 50 are set to be thicker than the plate thicknesses of the third wall portion 43, the reinforcing ribs 46, and the vertical ribs 48.

In this embodiment, the plurality of ejector pin seats 50 includes ejector pin seats 50 that are disposed, at levels overlapping the bumper reinforcement 80 and the protruding part 82 in the vehicle front-rear direction, at an intersection point between the third wall portion 43 and the reinforcing rib 46 of the load bearing part 40 and at an intersection point between the reinforcing rib 46 and the vertical rib 48. Thus, the arrangement of the ejector pin seats 50 is an effective arrangement from the viewpoint of enhancing the rigidity of the third wall portion 43 against a collision load input from the bumper reinforcement 80 and the protruding part 82.

On the other hand, the fifth wall portion 45 is connected on the vehicle lower side of the first wall portion 41 and extends from a portion on the vehicle lower side of the first wall portion 41 toward the vehicle front side. The fifth wall portion 45 extends in the vehicle front-rear direction, with a plate thickness direction oriented in the vehicle-height direction, and has principal surfaces facing the vehicle-height direction. A portion on the vehicle rear side of the crash box 70 is disposed on the principal surface constituting an upper surface of the fifth wall portion 45. A mount part 52 that is fixed to the suspension member 60 is provided on the fifth wall portion 45.

The mount part 52 has a mount block 54 that is formed on the principal surface constituting a lower surface of the fifth wall portion 45. The mount block 54 is disposed so as to protrude from the lower surface of the fifth wall portion 45 toward the vehicle lower side and face an end portion on the vehicle front side as well as an end portion on the outer side in the vehicle width direction of the suspension member 60. The end portion on the vehicle front side that is the end portion on the outer side in the vehicle width direction of the suspension member 60 is joined to the fifth wall portion 45 through the mount block 54 and a fastening member 94. The fastening member 94 is, for example, a bolt that penetrates the suspension member 60 and engages with an internal thread of the mount block 54. A configuration in which the mount block 54 is provided on the side of the suspension member 60 may be adopted, or a configuration in which the mount block 54 is a separate part may be adopted.

Here, FIG. 4 is an enlarged plan view of the load bearing part 40 as seen from the upper side. As shown in FIG. 4, the mount part 52 is disposed forward of the first wall portion 41 and rearward of the third wall portion 43 in the vehicle front-rear direction as seen in a plan view. In other words, the mount part 52 is disposed on the vehicle front side of the first wall portion 41 and the vehicle rear side of the third wall portion 43 as seen in a plan view. Thus, part of a collision load input from the protruding part 82, to be described later, into the third wall portion 43 is transmitted to the mount part 52 in the process of being transmitted from the third wall portion 43 to the first wall portion 41. Then, this part of the collision load is quickly transmitted through the mount part 52 to the suspension member 60. In the example shown in FIG. 4, the mount part 52 is disposed on the inner side in the vehicle width direction relative to the second wall portion 42, but a configuration in which the mount part 52 is disposed on the outer side in the vehicle width direction relative to the second wall portion 42 may be adopted.

### Suspension Member

As shown in FIG. 2 and FIG. 3, the suspension member 60 is installed on the vehicle lower side of the left and right front side members 16. The suspension member 60 includes a pair of side members 62 that extends along the vehicle front-rear direction, and a pair of cross members 64 that couples end portions on the vehicle front side of the pair of side members 62 to each other and end portions on the vehicle rear side thereof to each other. That is, the suspension member 60 has a rectangular frame shape as seen in a plan view. The suspension member 60 is a framework part that supports a suspension (not shown) of the vehicle 12, and supports the power unit (not shown) from the lower side. End portions on the vehicle front side that are end portions on the outer sides in the vehicle width direction of the suspension member 60 are mounted on the load bearing parts 40 through the mount parts 52.

At the end portions on the vehicle front side that are the end portions on the outer sides in the vehicle width direction of the suspension member 60, spacer members 66 extending toward the vehicle front side are provided. An end portion on the vehicle front side of each spacer member 66 is connected to a lower absorber (not shown) that is extended in the vehicle width direction. In the event of a frontal collision with a pedestrian, the lower absorber functions to absorb and thereby reduce the impact energy, and is made of a foam resin material, a plastic resin material, etc. As shown in FIG. 4, the position at which the spacer member 66 connects to the lower absorber is provided, as seen in a plan view, on the outer side in the vehicle width direction relative to the position at which the crash box 70 connects to the bumper reinforcement 80.

### Crash Box

As shown in FIG. 3 and FIG. 4, the crash box 70 has an upper wall portion 70A, a lower wall portion 70B, the inner wall portion 70C, and the outer wall portion 70D, and is extended from the end portion on the vehicle front side of the front side member 16 toward the vehicle front side. The crash box 70 is a tubular member with an axial direction oriented in the vehicle front-rear direction, and a cross-section thereof in a direction orthogonal to the extension direction is a rectangular closed cross-section. The crash box 70 is configured to undergo compressive plastic deformation when subjected to an axial compressive load equal to or larger than a predetermined value along the vehicle front-rear direction, and thereby to absorb the collision load.

The crash box according to the present invention is a member having an impact absorbing function for a front-side load, and may be integrally molded with the front side member (framework part) or may be a separate body.

The upper wall portion 70A constitutes an upper surface of the crash box 70, and an end portion on the vehicle front side of the upper wall portion 70A protrudes farther toward the front side than the inner wall portion 70C and the outer wall portion 70D and is joined to an upper surface of the bumper reinforcement 80 through fastening members 96. The lower wall portion 70B constitutes a lower surface of the crash box 70, and as with the upper wall portion 70A, an end portion thereof on the vehicle front side protrudes and is joined to a lower surface of the bumper reinforcement 80 through the fastening members 96. Each fastening member 96 is, for example, a bolt that penetrates the upper wall portion 70A, the bumper reinforcement 80, and the lower wall portion 70B, and a nut that engages with this bolt. A configuration in which a front end portion of the crash box 70 is joined to the bumper reinforcement 80 by welding may be adopted.

The inner wall portion 70C constitutes the side surface on the inner side in the vehicle width direction of the crash box 70, and an end portion thereof on the vehicle rear side is joined to the fourth wall portion 44 of the load bearing part 40. The outer wall portion 70D constitutes the side surface on the outer side in the vehicle width direction of the crash box 70, and an end portion thereof on the vehicle rear side is joined to the third wall portion 43 of the load bearing part 40. The outer wall portion 70D is disposed so as to face the protruding part 82 of the bumper reinforcement 80, to be described later, in the vehicle width direction.

### Bumper Reinforcement

The bumper reinforcement 80 is a hollow beam-like framework part and extends along the vehicle width direction. The bumper reinforcement 80 extends along the vehicle width direction such that the end portions thereof on the outer sides in the vehicle width direction project toward the outer sides in the vehicle width direction beyond the end portions on the outer sides in the vehicle width direction of the crash boxes 70 and connect to the crash boxes 70. As seen in a plan view, a middle portion in the vehicle width direction of the bumper reinforcement 80 is gently curved so as to be convex toward the vehicle front side.

Here, the protruding parts 82 that protrude toward the vehicle rear side are provided at the end portions on the outer sides in the vehicle width direction of the bumper reinforcement 80. While the bumper reinforcement 80 and the protruding parts 82 are being described as separate parts here, a configuration in which these parts are integrally formed may be adopted.

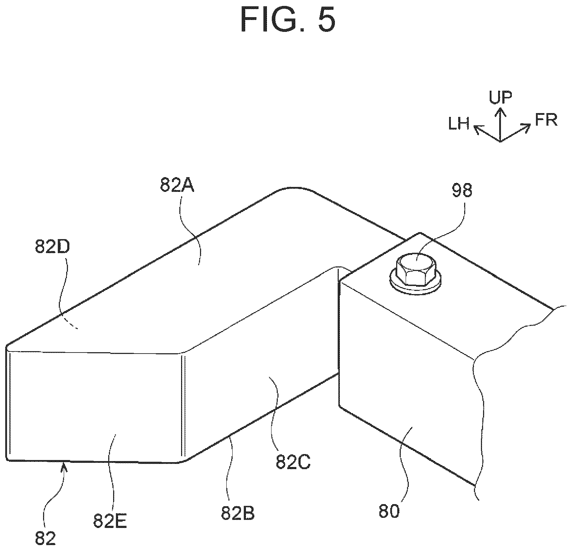

FIG. 5 is a perspective view, as seen from an obliquely right rear side, of the protruding part 82 provided at the end portion on the left side in the vehicle width direction of the bumper reinforcement 80. As shown in FIG. 5, the protruding part 82 is a solid block body that is molded using an aluminum alloy, a magnesium alloy, etc. as a material, and has an upper surface portion 82A, a lower surface portion 82B, an inner surface portion 82C, an outer surface portion 82D, and a first inclined portion 82E. The upper surface portion 82A constitutes an upper surface of the protruding part 82. The lower surface portion 82B constitutes a lower surface of the protruding part 82. The inner surface portion 82C constitutes a side surface on the inner side in the vehicle width direction of the protruding part 82. The outer surface portion 82D constitutes a side surface on the outer side in the vehicle width direction of the protruding part 82. The first inclined portion 82E is a flat surface and constitutes a rear surface of the protruding part 82.

The protruding part 82 has a connection end portion 84 that extends from an end portion on the vehicle front side of the inner surface portion 82C toward the inner side in the vehicle width direction. The connection end portion 84 is inserted through an opening that is formed at the end portion in the vehicle width direction of the bumper reinforcement 80, and is joined to the bumper reinforcement 80 through a fastening member 98. The fastening member 98 is, for example, a bolt that penetrates the bumper reinforcement 80 and the connection end portion 84, and a nut that engages with this bolt. A configuration may be adopted in which the connection end portion 84 is omitted and the protruding part 82 is joined to the bumper reinforcement 80 by welding.

In the event of a small-overlap collision of the vehicle 12, the above-described protruding part 82 quickly transmits a collision load input into the end portion on the outer side in the vehicle width direction of the bumper reinforcement 80 to the crash box 70. That is, in the event of a small-overlap collision, in the bumper reinforcement 80, a barrier B collides at a position farther on the outer side in the vehicle width direction than the crash box 70. Meanwhile, the end portion on the outer side in the vehicle width direction of the bumper reinforcement 80 undergoes bending deformation toward the vehicle rear side as well as the inner side in the vehicle width direction from a site of collision with the barrier B as a starting point. As a result, the end portion on the vehicle rear side of the protruding part 82 hits the outer wall portion 70D of the crash box 70 and quickly transmits the collision load.

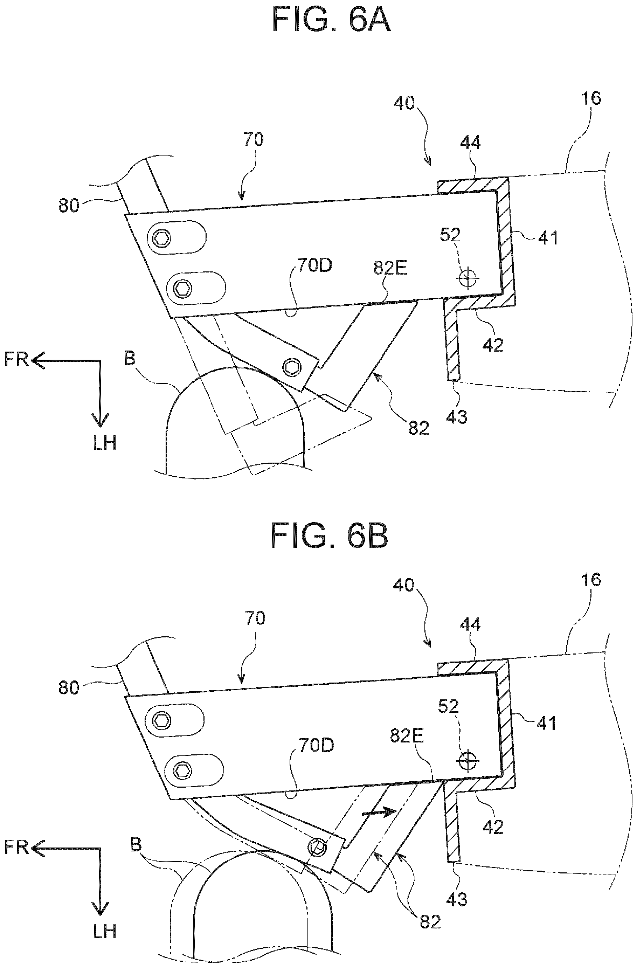

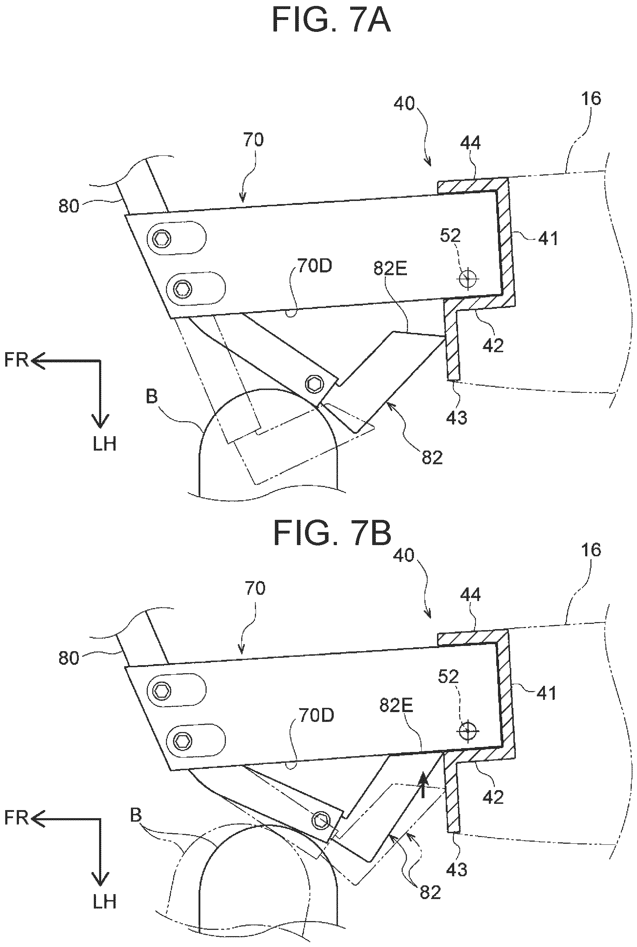

Here, as seen in a plan view, the protruding part 82 extends obliquely toward the vehicle rear side as well as the inner side in the vehicle width direction. On the other hand, as seen in a plan view, the first inclined portion 82E is inclined from the end portion on the inner side in the vehicle width direction toward the vehicle rear side as well as the outer side in the vehicle width direction. In the event of a small-overlap collision, therefore, when the end portion on the outer side in the vehicle width direction of the bumper reinforcement 80 undergoes bending deformation, the first inclined portion 82E of the protruding part 82 hits the outer wall portion 70D of the crash box 70. In this state, as seen in a plan view, the first inclined portion 82E is disposed so as to extend along the outer wall portion 70D of the crash box 70 and face the outer wall portion 70D. An end portion on the vehicle rear side of the first inclined portion 82E (the rear end portion of the protruding part 82) hits the third wall portion 43 of the load bearing part 40 (see the positions of the solid lines in FIG. 6B and FIG. 7B).

Since the first inclined portion 82E has a flat surface, the area of contact with the outer wall portion 70D of the crash box 70 is large, which inhibits generation of a local stress in the outer wall portion 70D. Thus, at least immediately after a collision, the crash box 70 is configured not to deform under the collision load input from the protruding part 82, and the outer wall portion 70D of the crash box 70 can be used as a reaction force surface.

### Workings and Advantages

In the following, the workings and advantages of the vehicle front structure 10 according to the embodiment will be described, and a transmission path of a collision load in the event of a small-overlap collision will be described in detail with reference to FIG. 6A to FIG. 7B.

The vehicle front structure 10 according to the embodiment includes the crash boxes 70 that extend toward the vehicle front side from the front end portions of the front side members 16 extending along the vehicle front-rear direction as framework parts of the vehicle 12, and on the vehicle front side of the crash boxes 70, the bumper reinforcement 80 extending in the vehicle width direction is provided. At the end portions on the outer sides in the vehicle width direction of the bumper reinforcement 80, the protruding parts 82 protruding toward the vehicle rear side are provided.

According to this configuration, in the event of a small-overlap collision, a collision load input from the barrier B is borne by the bumper reinforcement 80, and the collision load that is further input causes the end portion on the outer side in the vehicle width direction of the bumper reinforcement 80 to undergo bending deformation, so that the collision load is transmitted through the protruding part 82 to the outer wall portion 70D of the crash box 70.

Here, the protruding part 82 has the first inclined portion 82E that is inclined from the end portion on the inner side in the vehicle width direction toward the vehicle rear side as well as the outer side in the vehicle width direction as seen in a plan view. In other words, the first inclined portion 82E slopes outward from an inner side of the end portion of the protruding part in the vehicle width direction toward the vehicle rear side. Therefore, when the bumper reinforcement 80 undergoes bending deformation, the first inclined portion 82E of the protruding part 82 hits the outer wall portion 70D of the crash box 70. That is, the collision load transmitted from the bumper reinforcement is input through the first inclined portion 82E. In this state, the first inclined portion 82E is disposed so as to extend along the extension direction of the crash box 70 and face the side surface of the crash box 70. Thus, an input of a local load into the crash box 70 is inhibited and damage to the crash box 70 can be reduced.

In the embodiment, since the first inclined portion 82E has a flat surface, it comes into plane contact with the outer wall portion 70D of the crash box 70. Thus, the area of contact between the first inclined portion 82E and the crash box 70 increases and damage to the crash box 70 can be effectively reduced.

Here, when the end portion on the outer side in the vehicle width direction of the bumper reinforcement 80 undergoes bending deformation in the event of a small-overlap collision, the first inclined portion 82E of the protruding part 82 hits the outer wall portion 70D of the crash box 70 while the end portion on the vehicle rear side of the first inclined portion 82E hits the third wall portion 43 of the load bearing part 40. Thus, the collision load input from the bumper reinforcement 80 is divided into a distributed load that is transmitted toward the inner side in the vehicle width direction through the outer wall portion 70D of the crash box 70 and a distributed load that is transmitted toward the vehicle rear side through the third wall portion 43 of the load bearing part 40.

The distributed load that is transmitted toward the inner side in the vehicle width direction through the outer wall portion 70D of the crash box 70 is transmitted via the load bearing part 40 to the front end portion of the front side member 16, and is then transmitted to the end portion on the vehicle front side that is the end portion on the outer side in the vehicle width direction of the suspension member 60. Thus, a lateral force toward the opposite-collision side (the inner side in the vehicle width direction) is transmitted to the vehicle 12, and the vehicle 12 can be moved so as to dodge around the barrier B. In this way, in the vehicle front structure 10, the collision load is transmitted from the crash box 70 to the front side member 16 (framework part). That is, the crash box can be used as a reaction force surface for generating a lateral force toward the opposite-collision side.

Since the crash box 70 does not undergo bending deformation under a collision load input from the protruding part 82, when an offset collision or a full-overlap collision can occur as a secondary collision after a small-overlap collision, the collision load input in the vehicle front-rear direction can be absorbed by the crash box 70.

The distributed load that is transmitted toward the vehicle rear side through the third wall portion 43 of the load bearing part 40 is transmitted via the second wall portion 42 and the first wall portion 41 to the front end portion of the front side member 16. Thus, part of the collision load input by the small-overlap collision can be absorbed by the impact absorbing structure of the front side member 16.

In the event of a small-overlap collision, the starting point of bending deformation of the bumper reinforcement 80 differs according to variation in the amount of overlap between the vehicle 12 and the barrier B. In this case, variation occurs also in the behavior of the protruding part 82. Also in such a case, in the vehicle front structure 10 according to the embodiment, stable transmission of a collision load is possible. In the following, this will be described with reference to FIG. 6A to FIG. 7B. In FIG. 6A to FIG. 7B, the configuration of the load bearing part 40 is represented simply by a schematic cross-section.

For example, when the amount of overlap between the vehicle 12 and the barrier B is large, due to bending deformation of the bumper reinforcement 80 immediately after the collision, the first inclined portion 82E of the protruding part 82 may hit an intermediate portion in the extension direction of the crash box 70 (see FIG. 6A). Also in this case, as the collision load is further input, the first inclined portion 82E of the protruding part 82 can move toward the vehicle rear side along the side surface of the crash box 70 and hit the load bearing part 40 (FIG. 6B). Thus, the collision load can be transmitted through the protruding part 82 to the load bearing part 40.

When the amount of overlap between the vehicle 12 and the barrier B is small, bending deformation of the bumper reinforcement 80 immediately after the collision is minor, and the first inclined portion 82E of the protruding part 82 may hit the load bearing part 40 before the crash box 70 (see FIG. 7A). Also in this case, the end portion on the vehicle rear side of the protruding part 82 hits the third wall portion 43 of the load bearing part 40, and the protruding part 82 is guided by the third wall portion 43 so as to move toward the inner side in the vehicle width direction, which allows the first inclined portion 82E to hit the side surface of the crash box 70. In this way, the collision load can be transmitted through the protruding part 82 to the crash box 70.

Thus, since the third wall portion 43 of the load bearing part 40 extends from the side surface on the outer side in the vehicle width direction of the crash box 70 toward the outer side in the vehicle width direction at the position on the vehicle rear side relative to the protruding part 82, stable load transmission is possible.

In this embodiment, the load bearing part 40 is integrally formed in the front side member 16. This can improve the efficiency of transmission of a collision load from the load bearing part 40 to the front side member 16.

In this embodiment, the load bearing part 40 and the front side member 16 have an open cross-section that is open toward the outer side in the vehicle width direction. Thus, the load bearing part 40 and the front side member 16 can be molded by a die with the open direction of the cross-section as the die removal direction. This can facilitate the manufacturing of the load bearing part 40 and the front side member 16 and reduce the production cost.

In the embodiment, a load input from the protruding part 82 into the third wall portion 43 of the load bearing part 40 is transmitted through the second wall portion 42 to the first wall portion 41. Thus, since the second wall portion 42 extending in the vehicle front-rear direction is disposed between the third wall portion 43 and the first wall portion 41, an input of a distributed load into the vehicle rear side of the front side member 16 can be stabilized and the efficiency of transmission of the collision load can be improved.

The load bearing part 40 has the reinforcing ribs 46 that link the second wall portion 42 and the third wall portion 43 to each other. This increases the strength of the third wall portion 43 that receives an input of a collision load through the protruding part 82 when the bumper reinforcement 80 undergoes bending deformation, which can improve the efficiency of transmission of the collision load.

In the load bearing part 40, the mount part 52 for the suspension member 60 is disposed on the vehicle front side of the first wall portion 41 and the vehicle rear side of the third wall portion 43. Thus, when the bumper reinforcement 80 undergoes bending deformation, part of a collision load input from the protruding part 82 into the third wall portion 43 is transmitted to the mount part 52 in the process of being transmitted from the third wall portion 43 to the first wall portion 41. Then, this part of the collision load is transmitted through the mount part 52 to the suspension member 60. In this way, a collision load in the event of a small-overlap collision can be quickly transmitted to the suspension member 60, so that a lateral force toward the opposite-collision side can be quickly generated.

Moreover, in the embodiment, the load bearing part 40 has the fourth wall portion 44 that is connected on the inner side in the vehicle width direction of the first wall portion 41 and extends toward the vehicle front side. Therefore, the fourth wall portion 44 is disposed on the inner side in the vehicle width direction of the crash box 70. Thus, the crash box 70 is inhibited by the fourth wall portion 44 from moving toward the inner side in the vehicle width direction under a collision load that is input from the outer side in the vehicle width direction through the protruding part 82, so that the transmission path of the collision load can be stabilized. Further, the reaction force obtained from the crash box 70 increases owing to the fourth wall portion 44, which can improve the efficiency of transmission of the collision load to the front side member 16.

While the vehicle front structure according to the embodiment has been described above, the present invention is not limited thereto. Modified examples of the above-described embodiment will be enumerated below. Each modified example basically adheres to the configuration of the vehicle front structure according to the above-described embodiment and therefore can produce similar workings and advantages.

### First Modified Example

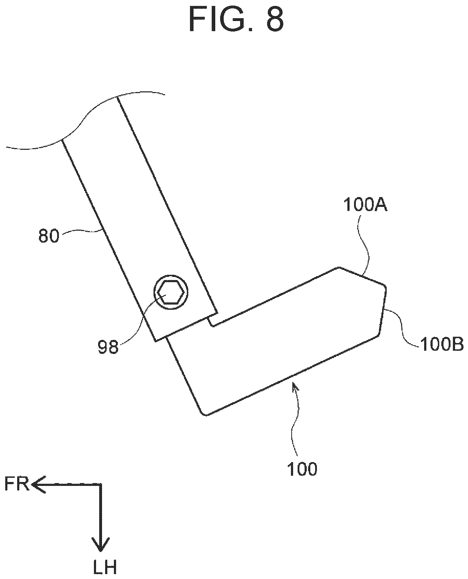

As shown in FIG. 8, the vehicle front structure according to the present invention may adopt a protruding part 100 according to a first modified example instead of the protruding part 82 of the above-described embodiment. The protruding part 100 has basically the same configuration as the protruding part 82, but is different in that a first inclined portion 100A and a second inclined portion 100B are provided in a rear surface of the protruding part 100. As with the first inclined portion 82E according to the above-described embodiment, the first inclined portion 100A is inclined from an end portion on the inner side in the vehicle width direction toward the vehicle rear side as well as the outer side in the vehicle width direction as seen in a plan view. On the other hand, the second inclined portion 100B is connected to an end portion on the vehicle rear side of the first inclined portion 100A and inclined toward the vehicle front side as well as the outer side in the vehicle width direction. In other words, the second inclined portion 100B is connected to a rear end of the first inclined portion 82E in the vehicle front-rear direction, and the second inclined portion 100B slopes outward in the vehicle width direction toward the vehicle front side. As one example, the first inclined portion 100A and the second inclined portion 100B each have a flat surface.

According to the above-described protruding part 100, when the bumper reinforcement 80 undergoes bending deformation, the first inclined portion 100A of the protruding part 100 hits the side surface on the outer side in the vehicle width direction (outer wall portion 70D) of the crash box 70 while the second inclined portion 100B hits the third wall portion 43 of the load bearing part 40. Thus, the area of contact between the protruding part 100 and the third wall portion 43 increases, which allows stable load transmission through the third wall portion 43.

### Second Modified Example

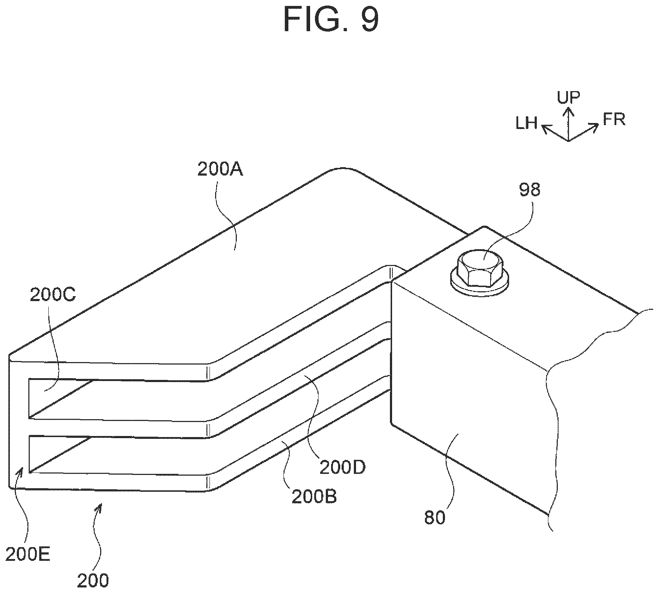

As shown in FIG. 9, the vehicle front structure according to the present invention may adopt a protruding part 200 according to a second modified example instead of the protruding part 82 of the above-described embodiment. The protruding part 200 has basically the same configuration as the protruding part 82, but is different in that a cross-section thereof orthogonal to the extension direction is an open cross-section that is open toward at least one side in the vehicle width direction.

As one example, the protruding part 200 includes an upper wall portion 200A, a lower wall portion 200B, an outer wall portion 200C, and a division wall portion 200D, and has a substantially E-shaped open cross-section that is open toward the inner side in the vehicle width direction. The upper wall portion 200A constitutes an upper wall of the protruding part 200. The lower wall portion 200B constitutes a lower wall of the protruding part 200. The outer wall portion 200C links an end portion on the outer side in the vehicle width direction of the upper wall portion 200A and an end portion on the outer side in the vehicle width direction of the lower wall portion 200B to each other. The division wall portion 200D is erected from a middle portion in the vehicle-height direction of the outer wall portion 200C and divides an internal space of the protruding part 200 into upper and lower parts.

At an end portion on the vehicle rear side of the protruding part 200, a first inclined portion 200E is formed that is inclined from an end portion on the inner side in the vehicle width direction toward the vehicle rear side as well as the outer side in the vehicle width direction as seen in a plan view. The first inclined portion 200E is a rear surface of the protruding part 200, and is formed by end surfaces on the vehicle rear side of the upper wall portion 200A, the lower wall portion 200B, the outer wall portion 200C, and the division wall portion 200D.

According to the above-described protruding part 200, when the bumper reinforcement 80 undergoes bending deformation due to a small-overlap collision, the first inclined portion 200E hits the side surface on the outer side in the vehicle width direction (outer wall portion 70D) of the crash box 70 and inputs the collision load. In this state, the end surfaces of the upper wall portion 200A, the lower wall portion 200B, the outer wall portion 200C, and the division wall portion 200D forming the first inclined portion 200E extend along the extension direction of the crash box 70. Thus, as with the first inclined portion 82E of the above-described embodiment, an input of a local load into the crash box 70 is inhibited, so that damage to the crash box 70 can be reduced.

Since the cross-section of the protruding part 200 is an open cross-section that is open toward the inner side in the vehicle width direction, a weight reduction can be achieved compared with when the protruding part is formed by a solid block body. In addition, the protruding part 200 can be easily molded by a die as a casting, and thus the production cost can be reduced.

A configuration in which the division wall portion 200D is omitted from the above-described configuration may be adopted, or a configuration in which two or more division wall portions 200D are provided may be adopted. A configuration may be adopted in which the outer wall portion 200C links middle portions in the vehicle width direction of the upper wall portion 200A and the lower wall portion 200B to each other, and thus the cross-section of the protruding part 200 may be an open cross-section that is open toward both sides in the vehicle width direction. A configuration may be adopted in which the outer wall portion 200C is omitted and an inner wall portion that links end portions on the inner side in the vehicle width direction of the upper wall portion 200A and the lower wall portion 200B to each other is included, and thus the cross-section of the protruding part 200 may be an open cross-section that is open toward the outer side in the vehicle width direction. Or an inner wall portion may be added to the protruding part 200, and thus the cross-section of the protruding part 200 may be a rectangular closed cross-section. In this case, an end portion on the vehicle front side of the protruding part 200 may be joined to the bumper reinforcement 80 by welding, or may be joined thereto through a fastening member as with the crash box 70.

### Third Modified Example

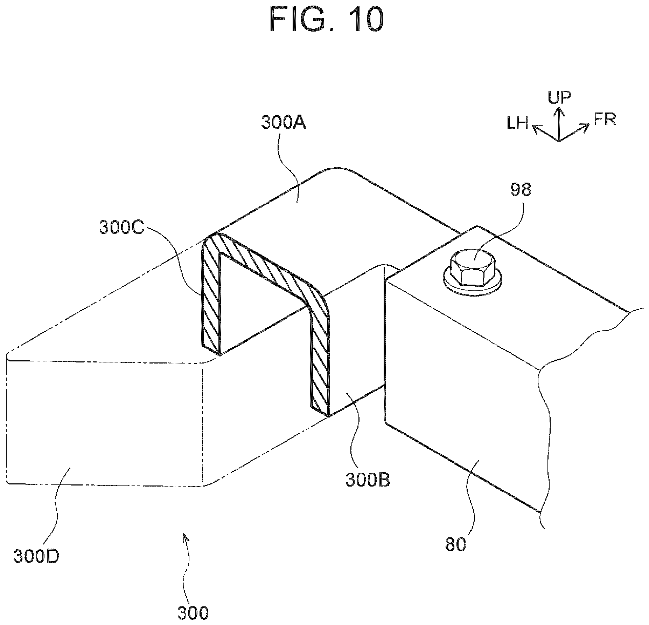

As shown in FIG. 10, the vehicle front structure according to the present invention may adopt a protruding part 300 according to a third modified example instead of the protruding part 82 of the above-described embodiment. The protruding part 300 has an upper wall portion 300A, an inner wall portion 300B, an outer wall portion 300C, and a first inclined portion 300D, and has a substantially U-shaped open cross-section that is open toward the vehicle lower side. The upper wall portion 300A constitutes an upper wall of the protruding part 300 and links an end portion on the vehicle upper side of the inner wall portion 300B and an end portion on the vehicle upper side of the outer wall portion 300C to each other. The inner wall portion 300B constitutes a wall portion on the inner side in the vehicle width direction of the protruding part 300. The outer wall portion 300C constitutes a wall portion on the outer side in the vehicle width direction of the protruding part 300. The first inclined portion 300D has a flat surface, and as with the first inclined portion 82E of the above-described embodiment, is inclined from an end portion on the inner side in the vehicle width direction toward the vehicle rear side as well as the outer side in the vehicle width direction as seen in a plan view.

As with the protruding part 82 of the above-described embodiment, the above-described protruding part 300 can reduce damage to the crash box 70. Since the cross-section of the protruding part 300 is an open cross-section that is open toward the vehicle lower side, a weight reduction can be achieved compared with when the protruding part is formed by a solid block body. In addition, the protruding part 300 can be easily molded by a die as a casting and thus the production cost can be reduced.

A configuration may be adopted in which the upper wall portion 300A is omitted and a lower wall portion that links end portions on the vehicle lower side of the inner wall portion 300B and the outer wall portion 300C to each other is provided, and thus the cross-section of the protruding part 300 may be an open cross-section that is open toward the vehicle upper side.

### Fourth Modified Example

While this is not shown, the load bearing part 40 may be omitted from the vehicle front structure according to the above-described embodiment. In the case where the load bearing part 40 is provided, one or both of the second wall portion 42 and the fourth wall portion 44 may be omitted.

## Claims

1. A vehicle front structure (10), comprising:
a framework part (16) that is disposed at a front part of a vehicle, on an outer side of the vehicle in a vehicle width direction, and that extends along a vehicle front-rear direction;
a crash box (70) that is extended from an end portion of the framework part (16) toward a vehicle front side, the end portion of the framework part (16) being an end portion on the vehicle front side of the framework part (16);
a bumper reinforcement (80) that is connected to the vehicle front side of the crash box (70); and
a protruding part (82; 100; 200; 300) that protrudes from an end portion of the bumper reinforcement (80) toward a vehicle rear side, the end portion of the bumper reinforcement (80) being an end portion on the outer side in the vehicle width direction of the bumper reinforcement (80), an end portion of the protruding part (82; 100; 200; 300) including a first inclined portion (82E; 100A; 200E; 300D), the end portion of the protruding part (82; 100; 200; 300) being an end portion on the vehicle rear side of the protruding part (82; 100; 200; 300), wherein:
the end portion of the bumper reinforcement (80) extends along the vehicle width direction so as to project toward the outer side in the vehicle width direction beyond an end portion of the crash box (70), the end portion of the crash box (70) being an end portion on the outer side in the vehicle width direction of the crash box (70); and
as seen in a plan view, the first inclined portion (82E; 100A; 200E; 300D) slopes outward from an inner side of the end portion of the protruding part (82; 100; 200; 300) in the vehicle width direction toward the vehicle rear side.

2. The vehicle front structure (10) according to claim 1, wherein the first inclined portion (82E; 100A; 200E; 300D) has a flat surface.

3. The vehicle front structure (10) according to claim 1 or claim 2, further comprising a load bearing part (40) that is provided rearward of the crash box (70) in the vehicle front-rear direction, wherein at least a part of the load bearing part (40) is disposed in the vehicle rear side relative to the protruding part (82; 100; 200; 300), and extends outward in the vehicle width direction from a side surface of the crash box (70), the side surface of the crash box (70) being a surface on the outer side of the crash box (70) in the vehicle width direction.

4. The vehicle front structure (10) according to any one of claims 1 to 3, wherein:
the protruding part (82; 100; 200; 300) includes a second inclined portion (100B); and
the second inclined portion (100B) is connected to a rear end of the first inclined portion (82E; 100A; 200E; 300D) in the vehicle front-rear direction, and the second inclined portion (100B) slopes outward in the vehicle width direction toward the vehicle front side.

5. The vehicle front structure (10) according to claim 3, wherein the load bearing part (40) is integrally provided in the framework part (16).

6. The vehicle front structure (10) according to claim 3, wherein the load bearing part (40) and the framework part (16) each have an open cross-section that is open toward the outer side in the vehicle width direction.

7. The vehicle front structure (10) according to claim 3, wherein the load bearing part (40) includes:
a first wall portion (41) that is disposed on the vehicle rear side of the crash box (70) and extends in the vehicle width direction;
a second wall portion (42) that is connected on the outer side in the vehicle width direction of the first wall portion (41) and extends toward the vehicle front side; and
a third wall portion (43) that is connected on the vehicle front side of the second wall portion (42) and extends from the side surface on the outer side in the vehicle width direction of the crash box (70) toward the outer side in the vehicle width direction.

8. The vehicle front structure (10) according to claim 7, wherein the load bearing part (40) includes a reinforcing rib (46) that links the second wall portion (42) and the third wall portion (43) to each other.

9. The vehicle front structure (10) according to claim 7 or claim 8, wherein the load bearing part (40) includes a mount part (52) for a suspension member that is provided forward of the first wall portion (41) and rearward of the third wall portion (43) in the vehicle front-rear direction.

10. The vehicle front structure (10) according to claim 7 or claim 8, wherein the load bearing part (40) includes a fourth wall portion (44) that is connected on the inner side in the vehicle width direction of the first wall portion (41) and extends toward the vehicle front side.
